# EUROPÄISCHE PATENTSCHRIFT

(11) **EP 3 741 196 B1**
(45) Veröffentlichungstag und Bekanntmachung des Hinweises auf die Patenterteilung: **30.11.2022**
(21) Anmeldenummer: 20155870.7
(22) Anmeldetag: 06.02.2020
(51) Int. Cl.: A01B 76/00, G05B 23/02, G07C 5/00

(54) **VERFAHREN ZUR ERMITTLUNG EINER FEHLERURSACHE BEI EINER LANDWIRTSCHAFTLICHEN ARBEITSMASCHINE**
METHOD FOR DETERMINING A FAULT CAUSE IN AN AGRICULTURAL WORKING MACHINE
PROCÉDÉ DE DÉTERMINATION D'UNE CAUSE DE DÉFAUT DANS UNE MACHINE DE TRAVAIL AGRICOLE

(30) Priorität: 14.05.2019 DE 102019112569
(43) Veröffentlichungstag der Anmeldung: 25.11.2020
(73) Patentinhaber: CLAAS Selbstfahrende Erntemaschinen GmbH, 33428 Harsewinkel (DE)
(72) Erfinder: Thöle, Christoph, 49451 Holdorf (DE); Venherm, Patrick, 48336 Sassenberg (DE); Dasenbrock, Thilo, 49377 Vechta (DE)
(74) Vertreter: CLAAS Gruppe

(56) Entgegenhaltungen:
- EP-A1- 1 564 688
- WO-A1-2006/105930
- DE-A1- 10 059 464
- DE-A1- 10 204 076
- DE-A1- 10 315 344

## Beschreibung

Die Erfindung betrifft ein Verfahren zur Ermittlung einer Fehlerursache bei einer landwirtschaftlichen Arbeitsmaschine gemäß Anspruch 1 sowie ein Computersystem zur Durchführung zumindest einer Analyseroutine des vorschlagsgemäßen Verfahrens gemäß Anspruch 18.

Reparaturen landwirtschaftlicher Arbeitsmaschinen sind oft langwierig und teuer. Insbesondere während einer Ernteperiode kommen zu den Reparaturkosten noch Stillstandskosten hinzu. Grundsätzlich können Fehler bei landwirtschaftlichen Arbeitsmaschinen auf interne und externe Fehlerursachen zurückgeführt werden. Dem Auffinden dieser Fehlerursachen kommt mehrfache Bedeutung zu. Ist die Fehlerursache bekannt, können derartige Fehler möglicherweise in Zukunft vermieden werden. Gleichzeitig wird auch das Beheben des Fehlers kosteneffizienter möglich, wenn nicht diverse Ersatzteile bestellt und ausprobiert werden müssen.

Bisher erfolgt die Ermittlung von Fehlerursachen bei landwirtschaftlichen Arbeitsmaschinen auf Basis der Erfahrung der jeweiligen Werkstatt und gegebenenfalls gebündelter weiterer Erfahrungen, zum Beispiel des Herstellers. Diese Betrachtungen erfolgen jedoch üblicherweise retrospektiv, ohne dass tatsächlich Daten zur Fehlerursache vorlägen. Ein Diagnosesystem zur Bestimmung von fehlerhaften Komponenten ist aus der WO2006/105930A bekannt.

Der Erfindung liegt das Problem zu Grunde, die bekannten Verfahren zur Ermittlung von Fehlerursachen bei landwirtschaftlichen Arbeitsmaschinen derart auszugestalten und weiterzubilden, dass die Ermittlung einer Fehlerursache bei einer landwirtschaftlichen Arbeitsmaschine effektiver wird.

Das obige Problem wird bei einem Verfahren gemäß Anspruch 1 durch die Merkmale von Anspruch 1 gelöst.

Wesentlich ist zunächst die Überlegung, dass mit Hilfe von Betriebsdaten und Konstruktionsdaten der landwirtschaftlichen Arbeitsmaschine identifiziert werden kann, ob der Fehler auf die Auslastung und/oder die Konstruktion der landwirtschaftlichen Arbeitsmaschine zurückführbar ist. Dies ermöglicht es beispielsweise, eine fehlerverursachende Auslastung zu unterlassen oder einen Konstruktionsfehler zu beseitigen. Außerdem kann so die Reparatur der landwirtschaftlichen Arbeitsmaschine beschleunigt werden.

Im Einzelnen wird nun ein Verfahren zur Ermittlung einer Fehlerursache bei einer landwirtschaftlichen Arbeitsmaschine mit einem fehlerhaften Bauteil vorgeschlagen. Vorschlagsgemäß werden in einer Analyseroutine auf Basis von, Auslastungsdaten umfassenden, Betriebsdaten der landwirtschaftlichen Arbeitsmaschine und zumindest Konstruktionsdaten des Bauteils umfassenden, der landwirtschaftlichen Arbeitsmaschine zugeordneten Konstruktionsdaten Fehlerursachendaten ermittelt. Vorschlagsgemäß wird weiterhin auf Basis der Analyseroutine ermittelt, ob eine Auslastung und/oder eine Konstruktion der landwirtschaftlichen Arbeitsmaschine, insbesondere des fehlerhaften Bauteils, als eine Fehlerursache ausschließbar und/oder identifizierbar ist.

Vorteilhafte Ausgestaltungen der Analyseroutine gibt Anspruch 2 an. Demnach können aggregierte Betriebsdaten einer Vielzahl landwirtschaftlicher Arbeitsmaschinen und/oder der Vielzahl landwirtschaftlicher Arbeitsmaschinen zugeordnete aggregierte Konstruktionsdaten zur Ermittlung der Fehlerursachendaten genutzt werden. Dies hat den Vorteil, dass bei größeren Datenmengen besser zwischen zufälligen und systematischen Effekten unterschieden werden kann und, dass versteckte Interdependenzen besser identifiziert werden können. Dadurch wird es besser möglich, die Fehlerursache des Bauteils zu isolieren.

Bei einer bevorzugten Ausführungsform gemäß Anspruch 3 werden in der Analyseroutine weiterhin Umweltdaten und/oder aggregierte Umweltdaten berücksichtigt. Da landwirtschaftliche Arbeitsmaschinen in direktem Kontakt mit Wetter und Boden ihrer jeweiligen Lokalität stehen, wird ihr Betrieb stark von ihrer Umwelt beeinflusst. So verschleißt beispielsweise ein Schneidwerk bei steinigem Boden deutlich schneller als bei lehmigem Boden. Durch Berücksichtigung dieser Effekte, ist es möglich, das Fehlerbild des Bauteils mit den Umwelteinflüssen der Lokalität in Verbindung zu bringen und somit die Fehlerursache besser einzugrenzen.

Werden, wie gemäß Anspruch 4 vorgeschlagen, in der Analyseroutine weiterhin Testdaten berücksichtigt, können so weitere, spezifische Daten gewonnen werden.

Die bevorzugten Ausgestaltungen der Ansprüche 5, 6 und 8 beziehen sich auf bevorzugte Ausgestaltungen der Umweltdaten, der Betriebsdaten und der Konstruktionsdaten. Bei der besonders bevorzugten Ausgestaltung gemäß Anspruch 7 werden die Betriebsdaten dabei sensorisch während eines Betriebs der landwirtschaftlichen Arbeitsmaschine gesammelt. Insgesamt sind gerade diese Daten besonders dazu geeignet, verschiedene, möglicherweise fehlerverursachende, Einflüsse auf die landwirtschaftliche Arbeitsmaschine abzubilden.

Die bevorzugten Ausgestaltungen gemäß der Ansprüche 9 und 10 betreffen Fehlerketten. Derartige Fehlerketten können bei landwirtschaftlichen Arbeitsmaschinen auftreten, wenn zum Beispiel ein Fehler an einem Bauteil durch einen Fehler an einem anderen Bauteil verursacht wird. Dementsprechend liefern diese Fehlerketten Hinweise darauf, ob das fehlerhafte Bauteil nur das letzte Glied in einer Kette von fehlerhaften Bauteilen ist, oder tatsächlich selbst den Fehler verursacht hat.

Bei noch einer bevorzugten Ausgestaltung gemäß Anspruch 11 wird ermittelt, ob ein Materialfehler des fehlerhaften Bauteils als eine Fehlerursache ausschließbar und/oder identifizierbar ist. Auf Basis dieser Analyse können dann qualifizierte Entscheidungen zum Austausch des fehlerhaften Bauteils getroffen werden.

Die Ausgestaltungen der Ansprüche 12 und 13 betreffen ein möglichst universell einsetzbares Diagnosegerät, mithilfe dessen die Betriebsdaten gesammelt werden können. Sofern das Diagnosegerät heterogene Betriebsdaten sammelt, die insbesondere von unterschiedlichen Bauteilherstellern und/oder unterschiedlichen Bauteilserien stammen, kann mit simplen Mitteln eine gute Datenbasis aufgebaut werden.

Bei den Ausgestaltungen gemäß der Ansprüche 14 und 15 wird zusätzlich ermittelt, ob möglicherweise eine Steuerung der landwirtschaftlichen Arbeitsmaschine den Fehler des fehlerhaften Bauteils begünstigt haben könnte. Ein Problem in der Steuerung kann möglicherweise gar nicht durch den Austausch des fehlerhaften Bauteils allein behoben werden. Entsprechend wird gemäß Anspruch 15 ein Softwareupdate genutzt.

Bei der Ausgestaltung gemäß Anspruch 16 werden die gewonnenen Fehlerursachendaten genutzt, um noch für andere, gleichartige landwirtschaftliche Arbeitsmaschinen eine Reparatur und/oder Wartung vorzuschlagen.

Gemäß Anspruch 17 wird weiter vorzugsweise ermittelt, ob statt eines einzelnen Bauteils der landwirtschaftlichen Arbeitsmaschine eine Kombination mindestens zweier Bauteile und/oder eine Kombination von mindestens einem Bauteil mit mindestens einem Umweltzustand und/oder einem Nutzungsprofil eines Nutzers als Fehlerursache identifizierbar und/oder ausschließbar sind. Dies trägt dem Umstand Rechnung, dass manche Fehler nur in bestimmten Konstellationen auftreten.

Nach einer weiteren Lehre gemäß Anspruch 18, der eigenständige Bedeutung zukommt, wird ein Computersystem beansprucht, das zumindest dazu ausgestaltet ist, die Analyseroutine des vorschlagsgemäßen Verfahrens durchzuführen. Es ist dabei üblicherweise so, dass ein derartiges Computersystem benötigt wird, da die Menge an Daten nicht mehr manuell analysierbar ist. Auf alle Ausführungen zu dem vorschlagsgemäßen Verfahren darf verwiesen werden.

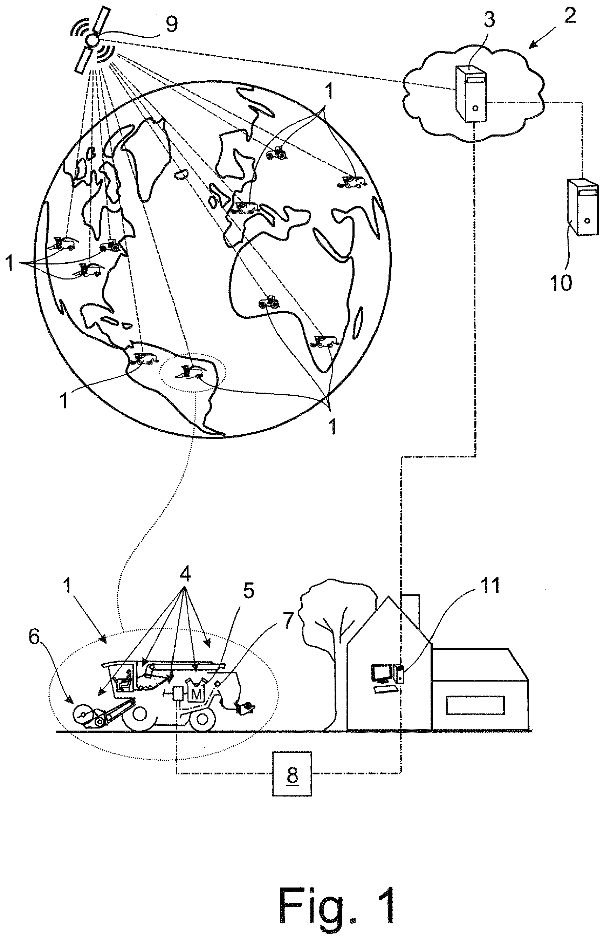

Im Folgenden wird die Erfindung anhand einer lediglich ein Ausführungsbeispiel darstellenden Zeichnung näher erläutert. In der Zeichnung zeigt
- Fig. 1: das Sammeln der Datenbasis des vorschlagsgemäßen Verfahrens inklusive des vorschlagsgemäßen Computersystems.

Das vorschlagsgemäße Verfahren findet Anwendung bei einer landwirtschaftlichen Arbeitsmaschine 1. Bei dieser kann es sich um eine Erntemaschine wie einen Mähdrescher oder dergleichen handeln. Das vorschlagsgemäße Verfahren wird vorzugsweise zumindest teilweise von einem Computersystem 2 durchgeführt. Das Computersystem 2 umfasst vorzugsweise einen oder mehrere Server 3.

Mittels des vorschlagsgemäßen Verfahrens wird zur Ermittlung einer Fehlerursache der landwirtschaftlichen Arbeitsmaschine 1, die ein fehlerhaftes Bauteil 4 aufweist, beigetragen. Das vorschlagsgemäße Verfahren umfasst eine, vorzugsweise von dem Computersystem 2 durchgeführte, Analyseroutine.

In der Analyseroutine werden auf Basis von, Auslastungsdaten umfassenden, Betriebsdaten der landwirtschaftlichen Arbeitsmaschine 1 und zumindest Konstruktionsdaten des fehlerhaften Bauteils 4 umfassenden, der landwirtschaftlichen Arbeitsmaschine 1 zugeordneten Konstruktionsdaten Fehlerursachendaten ermittelt. Auf Basis der Analyseroutine wird ermittelt, ob eine Auslastung und/oder eine Konstruktion der landwirtschaftlichen Arbeitsmaschine 1, insbesondere des fehlerhaften Bauteils 4, als eine Fehlerursache ausschließbar und/oder identifizierbar ist. Es kann dabei vorgesehen sein, dass in einem ersten Verfahrensschritt das fehlerhafte Bauteil 4 ermittelt wird und in einem weiteren, nachfolgenden, Verfahrensschritt ermittelt wird, ob die Auslastung und/oder die Konstruktion des fehlerhaften Bauteils 4 als eine Fehlerursache ausschließbar und/oder identifizierbar ist.

Bei dem fehlerhaften Bauteil 4 der landwirtschaftlichen Arbeitsmaschine 1 kann es sich beispielsweise um einen Antriebsmotor 5, ein Bauteil des Antriebsmotors 5 und/oder ein Erntewerkzeug, insbesondere ein Schneidwerkzeug 6, der landwirtschaftlichen Arbeitsmaschine 1 handeln.

Im Folgenden soll zuerst die Datenbasis der Analyseroutine thematisiert werden, bevor im Anschluss mögliche Fehlerursachen und Maßnahmen zur Fehllerbehebung diskutiert werden.

Es ist hier und vorzugsweise so, dass in der Analyseroutine die Fehlerursachendaten weiterhin auf Basis von einer Vielzahl anderer landwirtschaftlicher Arbeitsmaschinen 1 zugeordneten aggregierten Betriebsdaten und/oder der Vielzahl landwirtschaftlicher Arbeitsmaschinen 1 zugeordneten aggregierten Konstruktionsdaten ermittelt werden.

Der Begriff "Vielzahl" ist so zu verstehen, dass es sich zwar auch um nur mehr als eine andere landwirtschaftliche Arbeitsmaschine 1 handeln kann, die Vielzahl landwirtschaftlicher Arbeitsmaschinen 1 jedoch vorzugsweise mindestens 100 weiter vorzugsweise mindestens 500 und noch weiter vorzugsweise mindestens 1.000 andere landwirtschaftliche Arbeitsmaschinen 1 umfasst. Insbesondere kann die Vielzahl landwirtschaftlicher Arbeitsmaschinen 1 dabei global verteilt sein. Das heißt, dass die Vielzahl landwirtschaftlicher Arbeitsmaschinen 1 vorzugsweise mindestens landwirtschaftliche Arbeitsmaschinen 1 aus zwei Ländern, weiter vorzugsweise mindestens aus fünf Ländern und noch weiter vorzugsweise von mindestens zwei Kontinenten umfasst.

Wie in Fig. 1 dargestellt, existiert vorzugsweise eine Vielzahl landwirtschaftlicher Arbeitsmaschinen 1, die global verteilt sind. Wie später noch erläutert wird, werden die Betriebsdaten dieser Vielzahl landwirtschaftlicher Arbeitsmaschinen 1 vorzugsweise an den Server 3 übertragen. Die Daten der Vielzahl landwirtschaftlicher Arbeitsmaschinen 1 können dann mit Methoden der Datenverarbeitung, insbesondere der Big Data Analyse, zu aggregierten Betriebsdaten verarbeitet werden. Dafür können beispielsweise Statistische- und/oder Mustererkennungsmethoden verwendet werden. Aus diesen aggregierten Betriebsdaten werden dann vorzugsweise, insbesondere automatisiert mittels des Computersystems 2, Rückschlüsse auf Abläufe während des Betriebs der landwirtschaftlichen Arbeitsmaschine 1 gezogen. Hierfür können die Betriebsdaten der landwirtschaftlichen Arbeitsmaschine 1 mit in den Vorgang des Aggregierens der Betriebsdaten der Vielzahl der landwirtschaftlichen Arbeitsmaschinen 1 einfließen, oder anschließend damit verglichen werden. Die hier beschriebene Art der Datenaggregation lässt sich äquivalent auch auf die weiteren noch zu beschreibenden oder bereits beschriebenen Datentypen anwenden.

Der übliche Betriebszyklus einer landwirtschaftlichen Arbeitsmaschine 1 wird durch ihren Kauf ausgelöst. Sie wird anschließend betrieben, wobei die Betriebsdaten anfallen, und wird planmäßig gewartet. Das vorschlagsgemäße Verfahren dient dazu, neue Betriebszyklen neuer landwirtschaftlicher Arbeitsmaschinen 1 effizienter und kostengünstiger zu gestalten, indem Daten der alten Betriebszyklen verwendet werden.

Im Folgenden sollen anhand von Fig. 1 die vorzugsweise in der Analyseroutine berücksichtigbaren Daten und ihre Herkunft anhand des Ausführungsbeispiels näher beleuchtet werden.

Der Betrieb einer landwirtschaftlichen Arbeitsmaschine 1 kann je nach Umwelt sehr unterschiedlich ausfallen. Der Luftdruck auf Meeresniveau kann die Funktion des Antriebsmotors 5 anders beeinflussen als der Luftdruck auf 3.000 Höhenmetern, an einem sonnigen Tag kann eine landwirtschaftliche Arbeitsmaschine 1 auf einem zu bewirtschaftenden Feld hohen Temperaturen ausgesetzt sein. Aufgrund der Notwendigkeit die Ernte einzubringen, kann die landwirtschaftliche Arbeitsmaschine 1 auch bei widrigsten Wetterbedingungen eingesetzt werden. Zudem erfordert der Einsatz auf einem Feld an einem Berghang deutlich andere Eigenschaften als auf einem Feld auf einer Flutebene. Dementsprechend ist es vorzugsweise so, dass in der Analyseroutine die Fehlerursachendaten weiterhin auf Basis von der landwirtschaftlichen Arbeitsmaschine 1 zugeordneten Umweltdaten und/oder der Vielzahl landwirtschaftlicher Arbeitsmaschinen 1 zugeordneten aggregierten Umweltdaten ermittelt wird.

Die Umweltdaten und/oder die aggregierten Umweltdaten können dabei Wetterdaten und/oder Geodaten und/oder Klimadaten und/oder Erntedaten, insbesondere Ernteperiodendaten, umfassen. Alternativ oder zusätzlich können die Umweltdaten Mikro- und/oder Makrodaten umfassen. Die Mikrodaten betreffen dabei das direkte Umfeld der landwirtschaftlichen Arbeitsmaschine 1, insbesondere ein zu bearbeitendes Feld, und die Makrodaten betreffen dabei, zumindest potentiell, eine Mehrzahl an landwirtschaftlichen Arbeitsmaschinen 1. Die Mikrodaten könnten zum Beispiel die Information umfassen, dass ein zu einem bestimmten Zeitpunkt bearbeitetes Feld sehr steinig war, während die Makrodaten zum Beispiel die Information umfassen könnten, dass in der Nähe des Äquators befindliche landwirtschaftliche Arbeitsmaschinen 1 häufiger hohen Temperaturen ausgesetzt sind. Dafür ist es nicht zwingend notwendig, dass sich tatsächlich eine Mehrzahl an landwirtschaftlichen Arbeitsmaschinen 1 in der Nähe des Äquators befindet, es können sich jedoch zumindest potentiell deutlich mehr landwirtschaftliche Arbeitsmaschinen 1 in der Nähe des Äquators befinden, als auf einem einzelnen Feld zu erwarten sind.

Die Umweltdaten umfassen vorzugsweise mindestens einen nicht von einer landwirtschaftlichen Arbeitsmaschine 1 gesammelten Datensatz. Weiter vorzugsweise ist es so, dass zumindest die Makrodaten, vorzugsweise die gesamten Umweltdaten, aus bezüglich der landwirtschaftlichen Arbeitsmaschinen 1 externer Datenquellen stammen. Weiter vorzugsweise sind die externen Datenquellen den landwirtschaftlichen Arbeitsmaschinen 1 auch nicht direkt zugeordnet. Dies ist zum Beispiel bei Wetterdaten eines Wetterdienstes der Fall.

Wie in Fig. 1 dargestellt existiert vorzugsweise eine Vielzahl landwirtschaftlicher Arbeitsmaschinen 1, die global verteilt sind und zu den aggregierten Betriebsdaten beitragen können. Aus den aggregierten Betriebsdaten werden vorzugsweise, insbesondere automatisiert mittels des Computersystems 2, Rückschlüsse auf Abläufe während des Betriebs der landwirtschaftlichen Arbeitsmaschine 1 gezogen.

Die Auslastungsdaten umfassen hier und vorzugsweise eine Anzahl an Betriebsstunden und/oder Motorlastdaten und/oder Ladedruckverläufe und/oder Kühlwassertemperaturverläufe und/oder Abgastemperaturverläufe der landwirtschaftlichen Arbeitsmaschine 1 und/oder eines Bauteils 4 der landwirtschaftlichen Arbeitsmaschine 1, insbesondere des fehlerhaften Bauteils 4. Die Auslastungsdaten können weiterhin eine Drehzahl zu bestimmten Zeitpunkten, eine Maximaldrehzahl, das Überschreiten einer maximalen Nutzlast und dergleichen mehr umfassen.

Die Betriebsdaten können zusätzlich oder alternativ Konfigurations- und Parametereinstellungsdaten und/oder Konfigurations- und Parametereinstellungsänderungsdaten und/oder Kalibrierungsdaten umfassen. Besonders bevorzugt umfassen die Betriebsdaten zumindest Fehlerdaten, insbesondere eine Fehlerart und/oder eine Fehlerhäufigkeit. Ganz allgemein können sich die Betriebsdaten und/oder die aggregierten Betriebsdaten jeweils auf die entsprechende landwirtschaftliche Arbeitsmaschine 1 und/oder zumindest ein Bauteil 4, insbesondere das fehlerhafte Bauteil 4, der landwirtschaftlichen Arbeitsmaschine 1 beziehen.

Hier und vorzugsweise werden die Betriebsdaten während eines Betriebs der landwirtschaftlichen Arbeitsmaschinen 1 mittels mindestens eines Sensors 7 der landwirtschaftlichen Arbeitsmaschinen 1 gesammelt.

Vorschlagsgemäß werden die Fehlerursachendaten in der Analyseroutine auf Basis von der landwirtschaftlichen Arbeitsmaschine 1 zugeordneten Konstruktionsdaten ermittelt. Diese Konstruktionsdaten umfassen vorzugsweise Identifikationsdaten, insbesondere Baureihendaten und/oder Herstellerdaten, und/oder technische Eigenschaften der landwirtschaftlichen Arbeitsmaschine 1 und/oder eines Bauteils der landwirtschaftlichen Arbeitsmaschine 1, zumindest des fehlerhaften Bauteils 4.

Da landwirtschaftliche Arbeitsmaschinen 1 komplexe Systeme sind, kann es vorkommen, dass Fehler in einem Bauteil 4 sich auch auf andere Bauteile 4 auswirken. Derartige Abhängigkeiten können offensichtlich sein, sind dies häufig jedoch nicht. Erst durch die Auswertung der Daten der Vielzahl landwirtschaftlicher Arbeitsmaschinen 1 können derartige gehäuft auftretende Fehlerketten sichtbar gemacht werden. Entsprechend ist es vorzugsweise so, dass die ermittelten Fehlerursachendaten bei gleichartigen fehlerhaften Bauteilen 4 der Vielzahl landwirtschaftlicher Arbeitsmaschinen 1 aufgetretene Fehlerketten umfassen.

Bei verketteten Fehlern kommt der Ermittlung der Fehlerursachen besondere Bedeutung zu. Wird der ursächliche Fehler nicht behoben, kann dieser sich in wiederkehrenden, teils obskuren, Fehlerbildern manifestieren. Vorzugsweise wird daher auf Basis der Analyseroutine ermittelt, ob eine derartige Fehlerkette als eine Fehlerursache ausschließbar und/oder identifizierbar ist.

Dadurch, dass hier nicht nur nachträglich Fehlercodes der landwirtschaftlichen Arbeitsmaschine 1 ausgelesen werden können, sondern die ermittelten Fehlerursachendaten den Fehlerketten zugeordnete Betriebsdaten, insbesondere Auslastungsdaten, umfassen können, wird es möglich, die tatsächlichen Abläufe vor und während des Auftretens der Fehler zu analysieren. Es ist daher bevorzugt so, dass auf Basis der Analyseroutine ermittelt wird, ob diese Betriebsdaten als eine Fehlerursache ausschließbar und/oder identifizierbar sind.

Es ergibt sich aus obiger Darstellung, dass es ganz allgemein vorteilhaft ist, wenn die Betriebsdaten der landwirtschaftlichen Arbeitsmaschine 1, insbesondere die Auslastungsdaten, sich auf einen Zeitpunkt vor oder während des Auftretens des Fehlers beziehen.

Alternativ oder zusätzlich kann vorgesehen sein, dass auf Basis der Analyseroutine ermittelt wird, ob ein Materialfehler des fehlerhaften Bauteils 4 als eine Fehlerursache ausschließbar und/oder identifizierbar ist. Insbesondere dafür können die Fehlerursachendaten weiterhin auf Basis von dem fehlerhaften Bauteil 4 zugeordneten, nach Auftreten des Fehlers erhobenen, Analysedaten, insbesondere Materialanalysedaten, ermittelt werden. Diese Analysedaten können zum Beispiel in einer Werkstatt oder auch in einem Labor ermittelt werden.

Wie in Fig. 1 dargestellt, können die oben angesprochenen Daten aus ganz unterschiedlichen Quellen stammen. Hier und vorzugsweise stammen die Betriebsdaten von einem noch zu erläuternden Diagnosegerät 8, während die Umweltdaten vorzugsweise aus einer anderen Datenquelle, hier dem Satelliten 9, stammen. Die Konstruktionsdaten stammen hier und vorzugsweise wieder aus einer anderen Quelle, hier von einem weiteren Server 10.

Wie gerade erwähnt, werden die Betriebsdaten der landwirtschaftlichen Arbeitsmaschine 1 und/oder der Vielzahl der landwirtschaftlichen Arbeitsmaschinen 1 vorzugsweise von einem Diagnosegerät 8 gesammelt. Dieses Diagnosegerät 8 wird vorzugsweise im Rahmen einer Wartung, beispielsweise einer jährlichen Wartung, mit einer landwirtschaftlichen Arbeitsmaschine 1 verbunden. Vorzugsweise ist das Diagnosegerät 8 dabei keiner speziellen landwirtschaftlichen Arbeitsmaschine 1 zugeordnet, sondern kann zumindest an mehr als eine landwirtschaftliche Arbeitsmaschine 1 angeschlossen werden. Entsprechend sammelt das Diagnosegerät 8 weiter vorzugsweise heterogene Betriebsdaten, insbesondere von unterschiedlichen Bauteilherstellern und/oder unterschiedlichen Bauteilserien.

Hier und vorzugsweise ist das Diagnosegerät 8 an die landwirtschaftliche Arbeitsmaschine 1 anschließbar, um eine Diagnose der landwirtschaftlichen Arbeitsmaschine 1 zu erstellen. Die Betriebsdaten können gesammelt werden, während das Diagnosegerät 8 an die landwirtschaftliche Arbeitsmaschine 1 angeschlossen ist. Genauso vorteilhaft kann jedoch vorgesehen sein, dass die Betriebsdaten von dem Diagnosegerät 8 von der landwirtschaftlichen Arbeitsmaschine 1 empfangen werden, wenn das Diagnosegerät 8 an die landwirtschaftliche Arbeitsmaschine 1 angeschlossen ist. Es kann auch vorgesehen sein, dass das Diagnosegerät 8 Testdaten sammelt, während es an die landwirtschaftliche Arbeitsmaschine 1 angeschlossen ist. Hierfür kann das Diagnosegerät 8 weiter vorzugsweise die landwirtschaftliche Arbeitsmaschine 1 zum Durchführen von Testroutinen ansteuern.

In der gezeigten und insoweit bevorzugten Ausführungsform werden die von der landwirtschaftlichen Arbeitsmaschine 1 gesammelten Betriebsdaten an das Diagnosegerät 8 übertragen, das vorzugsweise anschließend an einen Computer 11 angeschlossen wird, der die Betriebsdaten dann an den Server 3 überträgt.

Zum Schutz vor unbefugten Änderungen kann vorgesehen sein, dass die Betriebsdaten mittels der Blockchain-Technologie geschützt werden. Hierfür kann die landwirtschaftliche Arbeitsmaschine 1 Daten als Blockchain abspeichern, das Diagnosegerät 8 kann diese wiederum mit eigenen Daten erweitern und der Server 3 kann dann prüfen, ob die Daten kohärent sind.

Bei den immer komplexer werdenden landwirtschaftlichen Arbeitsmaschinen 1 spielen Steuerungen eine immer stärker werdende Rolle. Es ist daher möglich, dass eigentlich einwandfrei funktionierende landwirtschaftliche Arbeitsmaschinen 1 nur durch fehlerhafte Eingriffe einer Steuerung beschädigt werden. Dementsprechend wird vorzugsweise auf Basis der Analyseroutine weiterhin ermittelt, ob eine Steuerung, insbesondere eine Softwaresteuerung der landwirtschaftlichen Arbeitsmaschine 1 oder eines Bauteils 4 der landwirtschaftlichen Arbeitsmaschine 1, insbesondere des fehlerhaften Bauteils 4 der landwirtschaftlichen Arbeitsmaschine 1, als die Fehlerursache ausschließbar oder identifizierbar ist.

Gerade bei Softwaresteuerungen kann häufig mittels eines Softwareupdates in diese eingegriffen werden. Dementsprechend wird die Softwaresteuerung mittels eines Softwareupdates vorzugsweise derart modifiziert, dass weitere gleichartige Fehler verhindert oder vermindert werden. Insbesondere wird dies bei der Vielzahl landwirtschaftlicher Arbeitsmaschinen 1 durchgeführt, so dass kostengünstig weitere Fehler verhindert oder vermindert werden.

Ganz allgemein ist es vorzugsweise so, dass auf Basis der Fehlerursachendaten und weiterer, insbesondere aggregierter, Fehlerursachendaten einer Mehrzahl anderer landwirtschaftlicher Arbeitsmaschinen 1 eine Reparatur und/oder Wartung noch anderer, ein zumindest bezüglich des fehlerhaften Bauteils 4 teilweise eine gleichartige Konstruktion aufweisendes Bauteil 4 aufweisender, landwirtschaftlicher Arbeitsmaschinen 1 geplant und/oder initiiert wird. Auch dadurch können kostenintensive Fehler verhindert oder vermindert werden.

Fehler sind nicht immer auf einzelne Ursachen zurückführbar. Bei Vorhandensein von Daten der Vielzahl landwirtschaftlicher Arbeitsmaschinen 1 werden jedoch Rückschlüsse auf Korrelationen zwischen dem Auftreten der Fehler und möglichen Ursachen ermittelbar. Daher wird vorzugsweise auf Basis der Analyseroutine weiterhin ermittelt, ob bei einigen der Vielzahl landwirtschaftlicher Arbeitsmaschinen 1 vorhandene Kombinationen mindestens zweier Bauteile 4 als eine Fehlerursache identifizierbar und/oder ausschließbar sind. Weiterhin oder alternativ wird vorzugsweise ermittelt, ob Kombinationen von mindestens einem Bauteil 4 mit mindestens einem in den Umweltdaten vorhandenem Umweltzustand und/oder Kombinationen von mindestens einem Bauteil mit einem aus den Betriebsdaten ableitbaren Nutzungsprofil eines Nutzers als eine Fehlerursache identifizierbar und/oder ausschließbar sind.

Bei dem Nutzungsprofil des Nutzers kann es sich um eine Betriebsweise der landwirtschaftlichen Arbeitsmaschine 1, beispielsweise ein häufiges Überladen oder Ähnliches handeln. Vorzugsweise umfasst das Nutzungsprofil das Einhalten vorgegebener Grenzwerte bei dem Betrieb der landwirtschaftlichen Arbeitsmaschine 1.

Wie bereits angesprochen kann das Verfahren teilweise oder vollständig, je nach Ausgestaltung, von dem Computersystem 2 durchgeführt werden. Das Computersystem 2, das Gegenstand einer eigenständigen Lehre ist, ist vorzugsweise dazu eingerichtet, zumindest die vorschlagsgemäße Analyseroutine durchzuführen.

Hier und vorzugsweise ist es das Computersystem 2, das aus den Betriebsdaten der Vielzahl der landwirtschaftlichen Arbeitsmaschinen 1 die aggregierten Betriebsdaten ermittelt und/oder das aus den Konstruktionsdaten der Vielzahl der landwirtschaftlichen Arbeitsmaschinen 1 die aggregierten Konstruktionsdaten ermittelt. Das Computersystem 2 kann eine Webapplikation aufweisen, mittels derer ein Nutzer das Ergebnis der Ermittlung der Fehlerursache einsehen kann. Auf alle Ausführungen zu dem vorschlagsgemäßen Verfahren darf bezüglich des Computersystems 2 verwiesen werden. Aufgrund der Komplexität der Datenmengen ist das Computersystem 2 vorzugsweise auch bei dem vorschlagsgemäßen Verfahren obligatorisch, das heißt, dass vorzugsweise zumindest die Analyseroutine und/oder das Aggregieren der Betriebsdaten des vorschlagsgemäßen Verfahrens manuell nicht möglich ist.

Das Computersystem 2 ist vorzugsweise keiner landwirtschaftlichen Arbeitsmaschine 1 zugeordnet und insbesondere Cloud-basiert.

### Bezugszeichenliste

- 1: landwirtschaftliche Arbeitsmaschine
- 2: Computersystem
- 3: Server
- 4: Bauteil
- 5: Antriebsmotor
- 6: Schneidwerkzeug
- 7: Sensor
- 8: Diagnosegerät
- 9: Satellit
- 10: weiterer Server
- 11: Computer

## Patentansprüche

1. Verfahren zur Ermittlung einer Fehlerursache in einer landwirtschaftlichen Arbeitsmaschine (1), ein fehlerhaftes Bauteil (4) umfassend,
**dadurch gekennzeichnet, dass**
in einer Analyseroutine auf Basis von, Auslastungsdaten umfassenden, Betriebsdaten der landwirtschaftlichen Arbeitsmaschine (1),
zumindest Konstruktionsdaten des fehlerhaften Bauteils (4) umfassende, der landwirtschaftlichen Arbeitsmaschine (1) zugeordnete Konstruktionsdaten und Fehlerursachendaten ermittelt werden, wobei die Analyseroutine eingerichtet ist, zu ermitteln, ob eine Auslastung und/oder eine Konstruktion der landwirtschaftlichen Arbeitsmaschine (1), insbesondere des fehlerhaften Bauteils (4), als eine Fehlerursache ausschließbar und/oder identifizierbar ist.

2. Verfahren nach Anspruch 1, **dadurch gekennzeichnet, dass** in der Analyseroutine die Fehlerursachendaten weiterhin auf Basis von einer Vielzahl anderer landwirtschaftlicher Arbeitsmaschinen (1) zugeordneten aggregierten Betriebsdaten und/oder der Vielzahl landwirtschaftlicher Arbeitsmaschinen (1) zugeordneten aggregierten Konstruktionsdaten ermittelt werden.

3. Verfahren nach Anspruch 1 oder 2, **dadurch gekennzeichnet, dass** in der Analyseroutine die Fehlerursachendaten weiterhin auf Basis von der landwirtschaftlichen Arbeitsmaschine (1) zugeordneten Umweltdaten und/oder der Vielzahl von landwirtschaftlichen Arbeitsmaschinen (1) zugeordneten aggregierten Umweltdaten ermittelt wird, vorzugsweise, dass die Umweltdaten und/oder die aggregierten Umweltdaten Wetterdaten und/oder Geodaten und/oder Klimadaten und/oder Erntedaten, insbesondere Ernteperiodendaten, umfassen, und/oder, dass die Umweltdaten Mikro- und/oder Makrodaten umfassen, wobei die Mikrodaten das direkte Umfeld einer zugeordneten landwirtschaftlichen Arbeitsmaschine (1), insbesondere ein zu bearbeitendes Feld, betreffen und wobei die Makrodaten, zumindest potentiell, eine Mehrzahl an landwirtschaftlichen Arbeitsmaschinen (1) betreffen.

4. Verfahren nach einem der vorhergehenden Ansprüche, **dadurch gekennzeichnet, dass** in der Analyseroutine die Fehlerursachendaten weiterhin auf Basis von der landwirtschaftlichen Arbeitsmaschine (1) zugeordneten Testdaten ermittelt werden.

5. Verfahren nach einem der vorhergehenden Ansprüche, **dadurch gekennzeichnet, dass** die Auslastungsdaten eine Anzahl an Betriebsstunden und/oder Motorlastdaten und/oder Ladedruckverläufe und/oder Kühlwassertemperaturverläufe und/oder Abgastemperaturverläufe der landwirtschaftlichen Arbeitsmaschine (1) und/oder eines Bauteils (4) der landwirtschaftlichen Arbeitsmaschine (1), insbesondere des fehlerhaften Bauteils (4), umfassen.

6. Verfahren nach einem der vorhergehenden Ansprüche, **dadurch gekennzeichnet, dass** die Betriebsdaten Konfigurations- und Parametereinstellungsdaten und/oder Konfigurations- und Parametereinstellungsänderungsdaten und/oder Kalibrierungsdaten und/oder Fehlerdaten, insbesondere eine Fehlerart und/oder eine Fehlerhäufigkeit, der landwirtschaftlichen Arbeitsmaschine (1) und/oder eines Bauteils (4) der landwirtschaftlichen Arbeitsmaschine (1), insbesondere des fehlerhaften Bauteils (4), umfassen.

7. Verfahren nach einem der vorhergehenden Ansprüche, **dadurch gekennzeichnet, dass** die landwirtschaftliche Arbeitsmaschine (1) mindestens einen Sensor (7) aufweist und dass die Betriebsdaten während eines Betriebs der landwirtschaftlichen Arbeitsmaschinen (1) mittels des mindestens einen Sensors (7) gesammelt werden.

8. Verfahren nach einem der vorhergehenden Ansprüche, **dadurch gekennzeichnet, dass** die Konstruktionsdaten Identifikationsdaten, insbesondere Baureihendaten und/oder Herstellerdaten, und/oder technische Eigenschaften, insbesondere Materialdaten, der landwirtschaftlichen Arbeitsmaschine (1) und/oder eines Bauteils (4) der landwirtschaftlichen Arbeitsmaschine (1), insbesondere des fehlerhaften Bauteils (4), umfassen.

9. Verfahren nach einem der vorhergehenden Ansprüche, **dadurch gekennzeichnet, dass** die ermittelten Fehlerursachendaten bei gleichartigen fehlerhaften Bauteilen (4) der Vielzahl landwirtschaftlicher Arbeitsmaschinen (1) aufgetretene Fehlerketten umfassen, vorzugsweise, dass auf Basis der Analyseroutine ermittelt wird, ob eine derartige Fehlerkette als eine Fehlerursache ausschließbar und/oder identifizierbar ist.

10. Verfahren nach Anspruch 9, **dadurch gekennzeichnet, dass** die ermittelten Fehlerursachendaten den Fehlerketten zugeordnete Betriebsdaten, insbesondere Auslastungsdaten, umfassen, vorzugsweise, dass auf Basis der Analyseroutine ermittelt wird, ob diese Betriebsdaten als eine Fehlerursache ausschließbar und/oder identifizierbar sind.

11. Verfahren nach einem der vorhergehenden Ansprüche, **dadurch gekennzeichnet, dass** auf Basis der Analyseroutine ermittelt wird, ob ein Materialfehler des fehlerhaften Bauteils (4) als eine Fehlerursache ausschließbar und/oder identifizierbar ist, und/oder, dass die Fehlerursachendaten weiterhin auf Basis von dem fehlerhaften Bauteil (4) zugeordneten, nach Auftreten des Fehlers erhobenen, Analysedaten, insbesondere Materialanalysedaten, ermittelt werden.

12. Verfahren nach einem der vorhergehenden Ansprüche, **dadurch gekennzeichnet, dass** die der landwirtschaftlichen Arbeitsmaschine (1) und/oder der Vielzahl der landwirtschaftlichen Arbeitsmaschinen (1) zugeordneten Betriebsdaten, und vorzugsweise Testdaten, von einem an die landwirtschaftliche Arbeitsmaschine (1) anschließbarem Diagnosegerät (8) gesammelt werden, vorzugsweise, dass das Diagnosegerät (8) heterogene Betriebsdaten, und vorzugsweise Testdaten, insbesondere von unterschiedlichen Bauteilherstellern und/oder unterschiedlichen Bauteilserien, sammelt.

13. Verfahren nach Anspruch 12, **dadurch gekennzeichnet, dass** das Diagnosegerät (8) an die landwirtschaftliche Arbeitsmaschine (1) anschließbar ist, um eine Diagnose der landwirtschaftlichen Arbeitsmaschine (1) zu erstellen und dass die Betriebsdaten, von dem Diagnosegerät (8) von der landwirtschaftlichen Arbeitsmaschine (1) empfangen werden, wenn das Diagnosegerät (8) an die landwirtschaftliche Arbeitsmaschine (1) angeschlossen ist, weiter vorzugsweise, dass die Testdaten von dem Diagnosegerät (8) ermittelt werden, wenn das Diagnosegerät (8) an die landwirtschaftliche Arbeitsmaschine (1) angeschlossen ist.

14. Verfahren nach einem der vorhergehenden Ansprüche, **dadurch gekennzeichnet, dass** auf Basis der Analyseroutine weiterhin ermittelt wird, ob eine Steuerung, insbesondere eine Softwaresteuerung, der landwirtschaftlichen Arbeitsmaschine (1) oder eines Bauteils (4) der landwirtschaftlichen Arbeitsmaschine (1), insbesondere des fehlerhaften Bauteils (4) der landwirtschaftlichen Arbeitsmaschine (1), als die Fehlerursache ausschließbar oder identifizierbar ist.

15. Verfahren nach Anspruch 14, **dadurch gekennzeichnet, dass** die Softwaresteuerung mittels eines Softwareupdates derart modifiziert wird, dass weitere, gleichartige Fehler verhindert oder vermindert werden.

16. Verfahren nach einem der vorhergehenden Ansprüche, **dadurch gekennzeichnet, dass** auf Basis der Fehlerursachendaten und weiterer, insbesondere aggregierter, Fehlerursachendaten einer Mehrzahl anderer landwirtschaftlicher Arbeitsmaschinen (1) eine Reparatur und/oder Wartung noch anderer, ein zumindest bezüglich des fehlerhaften Bauteils (4) teilweise eine gleichartige Konstruktion aufweisendes Bauteil (4) aufweisender, landwirtschaftlicher Arbeitsmaschinen (1) geplant und/oder initiiert wird.

17. Verfahren nach einem der Ansprüche 2 bis 16, **dadurch gekennzeichnet, dass** auf Basis der Analyseroutine weiterhin ermittelt wird, ob bei einigen der Vielzahl landwirtschaftlicher Arbeitsmaschinen (1) vorhandene Kombinationen mindestens zweier Bauteile (4) und/oder Kombinationen von mindestens einem Bauteil (4) mit mindestens einem in den Umweltdaten vorhandenem Umweltzustand und/oder Kombinationen von mindestens einem Bauteil (4) mit einem aus den Betriebsdaten ableitbaren Nutzungsprofil eines Nutzers als eine Fehlerursache identifizierbar und/oder ausschließbar sind.

18. Computersystem, **dadurch gekennzeichnet, dass** das Computersystem (2) dazu eingerichtet ist, zumindest das Verfahren nach einem der vorhergehenden Ansprüche durchzuführen, vorzugsweise, dass das Computersystem (2) aus Betriebsdaten der Vielzahl der landwirtschaftlichen Arbeitsmaschinen (1) die aggregierten Betriebsdaten ermittelt, und/oder, dass das Computersystem (2) aus Konstruktionsdaten der Vielzahl der landwirtschaftlichen Arbeitsmaschinen (1) die aggregierten Konstruktionsdaten ermittelt, weiter vorzugsweise, dass das Computersystem (2) eine Web-Applikation aufweist, mittels derer ein Nutzer das Ergebnis der Ermittlung der Fehlerursache abrufen kann.

## Claims

1. A method for determining a cause of error in an agricultural working machine (1) comprising a faulty component (4), **characterized in that**
in an analysis routine based on operating data of the working machine (1) comprising workload data,
at least design data associated with the agricultural working machine (1) comprising design data for the faulty component (4) and cause of error data are determined, wherein the analysis routine is configured to determine whether a workload and/or a design of the agricultural working machine (1), in particular of the faulty component (4), can be excluded and/or identified as a cause of error.

2. The method according to claim 1, **characterized in that** in the analysis routine, the cause of error data are further determined on the basis of aggregated operating data associated with a plurality of other agricultural working machines (1) and/or the aggregated design data associated with the plurality of agricultural working machines (1).

3. The method according to claim 1 or claim 2, **characterized in that** in the analysis routine, the cause of error data are further determined on the basis of environmental data associated with the agricultural working machine (1) and/or the aggregated environmental data associated with the plurality of agricultural working machines (1), preferably **in that** the environmental data and/or the aggregated environmental data comprise weather data and/or geographical data and/or climate data and/or harvest data, in particular harvest period data, and/or **in that** the environmental data comprise microdata and/or macrodata, wherein the microdata pertain to the immediate surroundings of an associated agricultural working machine (1), in particular a field to be worked, and wherein the macrodata at least potentially pertain to a plurality of agricultural working machines (1).

4. The method according to one of the preceding claims, **characterized in that** in the analysis routine, the cause of error data are further determined on the basis of test data associated with the agricultural working machine (1).

5. The method according to one of the preceding claims, **characterized in that** the workload data comprise a number of operating hours and/or engine load data and/or boost pressure characteristics and/or coolant water temperature characteristics and/or exhaust gas temperature characteristics of the agricultural working machine (1) and/or of a component (4) of the agricultural working machine (1), in particular the faulty component (4).

6. The method according to one of the preceding claims, **characterized in that** the operating data comprise configuration setting data and parameter setting data and/or configuration setting modification data and parameter setting modification data and/or calibration data and/or fault data, in particular a type of fault and/or a fault frequency, of the agricultural working machine (1) and/or of a component (4) of the agricultural working machine (1), in particular of the faulty component (4).

7. The method according to one of the preceding claims, **characterized in that** the agricultural working machine (1) has at least one sensor (7) and **in that** the operating data are collected by the at least one sensor (7) during an operation of the agricultural working machine (1).

8. The method according to one of the preceding claims, **characterized in that** the design data comprise identification data, in particular series data and/or manufacturer data and/or technical properties, in particular material data, for the agricultural working machine (1) and/or for a component (4) of the agricultural working machine (1), in particular the faulty component (4).

9. The method according to one of the preceding claims, **characterized in that** for similar faulty components (4) of the plurality of agricultural working machines (1), the determined cause of error data comprise chains of failure, preferably **in that** a determination is made on the basis of the analysis routine as to whether a chain of failure of this type can be excluded and/or identified as a cause of error.

10. The method according to claim 9, **characterized in that** the determined cause of error data comprise operating data associated with the chains of failure, in particular workload data , preferably **in that** a determination is made on the basis of the analysis routine as to whether these operating data can be excluded and/or identified as a cause of error.

11. The method according to one of the preceding claims, **characterized in that** a determination is made on the basis of the analysis routine as to whether a material defect of the faulty component (4) can be excluded and/or identified as a cause of error, and/or **in that** the cause of error data are further determined on the basis of analytical data, in particular material analytical data, associated with the faulty component (4) after the fault has occurred.

12. The method according to one of the preceding claims, **characterized in that** the operating data, and preferably test data, associated with the agricultural working machine (1) and/or the plurality of agricultural working machines (1) are collected by a diagnostic device (8) which can be connected to the agricultural working machine (1), preferably **in that** the diagnostic device (8) collects heterogeneous operating data, and preferably test data, in particular from different component manufacturers and/or from different series of components.

13. The method according to claim 12, **characterized in that** the diagnostic device (8) can be connected to the agricultural working machine (1) in order to carry out a diagnosis on the agricultural working machine (1) and **in that** the operating data are received by the diagnostic device (8) from the agricultural working machine (1) when the diagnostic device (8) is connected to the agricultural working machine (1), more preferably **in that** the test data are determined by the diagnostic device (8) when the diagnostic device (8) is connected to the agricultural working machine (1).

14. The method according to one of the preceding claims, **characterized in that** a further determination is made on the basis of the analysis routine as to whether a control, in particular a software control of the agricultural working machine (1) or of a component (4) of the agricultural working machine (1), in particular the faulty component (4) of the agricultural working machine (1), can be excluded and/or identified as the cause of error.

15. The method according to claim 14, **characterized in that** the software control is modified by means of a software update in a manner such that further faults of the same type can be avoided or mitigated.

16. The method according to one of the preceding claims, **characterized in that** on the basis of the cause of error data and further, in particular aggregated cause of error data from a plurality of other agricultural working machines (1), a repair and/or maintenance of other agricultural working machines (1) having a component (4) which is at least partially similar in design to that of the faulty component (4) can be planned and/or initiated.

17. The method according to one of claims 2 to 16, **characterized in that** a further determination is made on the basis of the analysis routine as to whether, in some combinations of at least two components (4) and/or combinations of at least one component (4) with at least one environmental condition in the environmental data and/or combinations of at least one component (4) with a usage profile for a user that can be derived from the operating data in some of the plurality of agricultural working machines (1) can be excluded and/or identified as a cause of error.

18. A computer system, **characterized in that** the computer system (2) is configured to carry out at least the method according to one of the preceding claims, preferably **in that** the computer system (2) determines the aggregated operating data from operating data for the plurality of agricultural working machines (1) and/or **in that** the computer system (2) determines the aggregated design data from design data for the plurality of agricultural working machines (1), more preferably **in that** the computer system (2) has a web application by means of which a user can retrieve the result of the determination of the cause of error.

## Revendications

1. Procédé de détermination d'une cause de défaut dans une machine de travail agricole (1) comprenant un composant défectueux (4),
**caractérisé en ce que**
dans une routine d'analyse, sur la base de données de fonctionnement comprenant des données relatives au taux d'utilisation de la machine de travail agricole (1),
des données de construction et des données de cause de défaut, comprenant au moins des données de construction du composant défectueux (4) et associées à la machine de travail agricole (1), sont déterminées, la routine d'analyse étant conçue pour déterminer si un taux d'utilisation et/ou une construction de la machine de travail agricole (1), en particulier du composant défectueux (4), peuvent être exclus et/ou identifiés comme cause de défaut.

2. Procédé selon la revendication 1, **caractérisé en ce que** dans la routine d'analyse, les données de cause de défaut continuent d'être déterminées sur la base de données de fonctionnement agrégées, associées à une multitude d'autres machines de travail agricoles (1), et/ou de données de construction agrégées, associées à la multitude de machines de travail agricoles (1).

3. Procédé selon la revendication 1 ou 2, **caractérisé en ce que** dans la routine d'analyse, les données de cause de défaut continuent d'être déterminées sur la base de données environnementales associées à la machine de travail agricole (1) et/ou de données environnementales agrégées, associées à la multitude de machines de travail agricoles (1), de préférence **en ce que** les données environnementales et/ou les données environnementales agrégées comprennent des données météorologiques et/ou des données géographiques et/ou des données climatiques et/ou des données de récolte, en particulier des données de période de récolte, et/ou **en ce que** les données environnementales comprennent des microdonnées et/ou des macrodonnées, les microdonnées concernant l'environnement immédiat d'une machine de travail agricole (1) associée, en particulier un champ à travailler, et les macrodonnées concernant, au moins potentiellement, une pluralité de machines de travail agricoles (1).

4. Procédé selon l'une des revendications précédentes, **caractérisé en ce que** dans la routine d'analyse, les données de cause de défaut continuent d'être déterminées sur la base de données de test associées à la machine de travail agricole (1).

5. Procédé selon l'une des revendications précédentes, **caractérisé en ce que** les données de taux d'utilisation comprennent un certain nombre d'heures de service et/ou des données de charge du moteur et/ou des variations de pression de suralimentation et/ou des variations de température de l'eau de refroidissement et/ou des variations de température des gaz d'échappement de la machine de travail agricole (1) et/ou d'un composant (4) de la machine de travail agricole (1), en particulier du composant défectueux (4).

6. Procédé selon l'une des revendications précédentes, **caractérisé en ce que** les données de service comprennent des données de configuration et de réglage de paramètres et/ou des données de changement de configuration et de réglage de paramètres et/ou des données d'étalonnage et/ou des données de défaut, notamment un type de défaut et/ou une fréquence de défaut, de la machine de travail agricole (1) et/ou d'un composant (4) de la machine de travail agricole (1), en particulier du composant défectueux (4).

7. Procédé selon l'une des revendications précédentes, **caractérisé en ce que** la machine de travail agricole (1) présente au moins un capteur (7) et **en ce que** les données de fonctionnement sont recueillies à l'aide du capteur (7), au nombre d'au moins un, au cours d'un fonctionnement des machines de travail agricoles (1).

8. Procédé selon l'une des revendications précédentes, **caractérisé en ce que** les données de construction comprennent des données d'identification, en particulier des données de gamme de fabrication et/ou des données de fabricant et/ou des caractéristiques techniques, notamment des données de matériaux, de la machine de travail agricole (1) et/ou d'un composant (4) de la machine de travail agricole (1), en particulier du composant défectueux (4).

9. Procédé selon l'une des revendications précédentes, **caractérisé en ce que** les données de cause de défaut déterminées comprennent des chaînes de défauts apparues sur des composants défectueux (4) similaires de la multitude de machines de travail agricoles (1), de préférence **en ce que** l'on détermine, sur la base de la routine d'analyse, si une chaîne de défauts de ce type peut être exclue et/ou identifiée comme cause de défaut.

10. Procédé selon la revendication 9, **caractérisé en ce que** les données de cause de défaut déterminées comprennent des données de fonctionnement associées aux chaînes de défauts, en particulier des données de taux d'utilisation, de préférence **en ce que** l'on détermine, sur la base de la routine d'analyse, si ces données de fonctionnement peuvent être exclues et/ou identifiées comme cause de défaut.

11. Procédé selon l'une des revendications précédentes, **caractérisé en ce que** l'on détermine, sur la base de la routine d'analyse, si un défaut de matériau du composant défectueux (4) peut être exclu et/ou identifié comme cause de défaut, et/ou **en ce que** les données de cause de défaut continuent d'être déterminées sur la base de données d'analyse associées au composant défectueux (4), en particulier de données d'analyse de matériau, recueillies après l'apparition du défaut.

12. Procédé selon l'une des revendications précédentes, **caractérisé en ce que** les données de fonctionnement, et de préférence les données de test, associées à la machine de travail agricole (1) et/ou à la multitude de machines de travail agricoles (1), sont collectées par un appareil de diagnostic (8) pouvant être connecté à la machine de travail agricole (1), de préférence **en ce que** l'appareil de diagnostic (8) collecte des données de fonctionnement hétérogènes, et de préférence des données de test, en particulier de fabricants de pièces différents et/ou de séries de pièces différentes.

13. Procédé selon la revendication 12, **caractérisé en ce que** l'appareil de diagnostic (8) peut être connecté à la machine de travail agricole (1) afin de réaliser un diagnostic de la machine de travail agricole (1), et **en ce que** les données de fonctionnement sont reçues par l'appareil de diagnostic (8) depuis la machine de travail agricole (1), lorsque l'appareil de diagnostic (8) est connecté à la machine de travail agricole (1), en outre de préférence **en ce que** les données de test sont déterminées par l'appareil de diagnostic (8) lorsque l'appareil de diagnostic (8) est connecté à la machine de travail agricole (1).

14. Procédé selon l'une des revendications précédentes, **caractérisé en ce que** l'on détermine en outre, sur la base de la routine d'analyse, si une commande, en particulier une commande logicielle, de la machine de travail agricole (1) ou d'un composant (4) de la machine de travail agricole (1), en particulier du composant défectueux (4) de la machine de travail agricole (1), peut être exclue ou identifiée comme cause de défaut.

15. Procédé selon la revendication 14, **caractérisé en ce que** la commande logicielle est modifiée à l'aide d'une mise à jour de logiciel, de manière à éviter ou réduire d'autres défauts du même type.

16. Procédé selon l'une des revendications précédentes, **caractérisé en ce que**, sur la base des données de cause de défaut et d'autres données, notamment de données de cause de défaut agrégées d'une pluralité d'autres machines de travail agricoles (1), on planifie et/ou on déclenche une réparation et/ou un entretien d'autres machines de travail agricoles (1) présentant un composant (4) ayant une construction en partie identique au moins par rapport au composant défectueux (4).

17. Procédé selon l'une des revendications 2 à 16, **caractérisé en ce que** l'on détermine en outre, sur la base de la routine d'analyse, si des combinaisons d'au moins deux composants (4) et/ou des combinaisons d'au moins un composant (4) avec au moins un état de l'environnement présent dans les données d'environnement et/ou des combinaisons d'au moins un composant (4) avec un profil d'utilisation d'un utilisateur déductible des données de fonctionnement, présentes dans certaines machines parmi la pluralité de machines de travail agricoles (1), peuvent être identifiées et/ou exclues comme une cause de défaut.

18. Système informatique, **caractérisé en ce que** le système informatique (2) est conçu pour mettre en œuvre au moins le procédé selon l'une des revendications précédentes, de préférence **en ce que** le système informatique (2) détermine les données de fonctionnement agrégées à partir de données de fonctionnement de la multitude des machines de travail agricoles (1), et/ou **en ce que** le système informatique (2) détermine les données de construction agrégées à partir de données de construction de la multitude de machines de travail agricoles (1), en outre de préférence **en ce que** le système informatique (2) présente une application web, à l'aide de laquelle un utilisateur peut consulter le résultat de la détermination de la cause du défaut.
